**Europäisches Patentamt**

**European Patent Office**

**Office européen des brevets**

(19)

(11) Veröffentlichungsnummer: **0 118 683**
**B1**

# EUROPÄISCHE PATENTSCHRIFT

(12)

(45) Veröffentlichungstag der Patentschrift:
**31.08.88**

(21) Anmeldenummer: **84100576.2**

(22) Anmeldetag: **20.01.84**

(51) Int. Cl.⁴: **B 29 C 47/00,** B 29 D 9/00, B 32 B 3/26

(54) **Mehrschichtige Stegplatte und Verfahren zu ihrer Herstellung.**

(30) Priorität: **03.02.83 DE 8302842 U**

(43) Veröffentlichungstag der Anmeldung:
**19.09.84 Patentblatt 84/38**

(45) Bekanntmachung des Hinweises auf die Patenterteilung:
**31.08.88 Patentblatt 88/35**

(84) Benannte Vertragsstaaten:
**AT BE CH DE FR GB IT LI NL SE**

(56) Entgegenhaltungen:
**EP-A-0 105 159**
**EP-A-0 110 238**
**DE-A-2 536 461**
**GB-A-2 028 228**

(73) Patentinhaber: **Röhm GmbH, Kirschenallee**
**Postfach 4242, D-6100 Darmstadt 1 (DE)**

(72) Erfinder: **Pöhlmann, Klaus Ernst, Silcherweg 9,**
**D-6100 Darmstadt (DE)**
Erfinder: **Vetter, Heinz, Dr.- Ing., Taunusstrasse 92,**
**D-6101 Rossdorf 1 (DE)**
Erfinder: **Friederich, Ernst, Am Erlenberg 18, D-6100**
**Darmstadt (DE)**

EP 0 118 683 B1

## Beschreibung

Die Neuerung betrifft eine mehrschichtige Stegplatte, die zwei im wesentlichen ebene Außenwände und diese einstückig verbindende Stege enthält, wobei wenigstens eine der Außenwände aus wenigstens zwei haftend verbundenen Schichten aus verschiedenen Kunststoffen besteht. Stegplatten dieser Art sind durch Extrusion herstellbar und weisen in der Regel in der Extrusionsrichtung ein über die ganze Länge gleichbleibendes Profil auf.

Gemäß DE-A-2 832 676 wird eine mehrschichtige Stegplatte dieser Art durch Koextrusion einer inneren Schicht aus Polycarbonatkunststoff und einer äußren Schicht aus Acrylglas erzeugt, wobei die Polycarbonatkunststoffschicht tragend ausgebildet und wesentlich dicker ist als die Acrylglasschicht, welche nur eine Dicke von 10 bis 100 µm hat. Von dickeren Acrylglasschichten wird wegen der Gefahr der Rißfortpflanzung in die Polycarbonatkunststoffschicht beim Bruch der Acrylglasschicht ausdrücklich abgeraten.

Die bekannten, mehrschichtigen Stegplatten sind infolge der hohen Zähigkeit der tragenden Polycarbonatschicht wenig schlagempfindlich und infolge der hohen chemischen Widerstandsfähigkeit der äußeren Acrylglasschicht hoch witterungsbeständig. Wegen des überwiegend verwendeten Polycarbonatkunststoffes sind diese Stegplatten wesentlich teurer als solche, die allein aus Acrylglas hergestellt sind. Diese haben jedoch den Nachteil einer begrenzten Schlagzähigkeit.

Es bestand die Aufgabe, die Schlagempfindlichkeit von überwiegend aus eine Acrylglas von niedriger Bruchdehnung bestehenden Stegplatten zu vemindern. Die Aufgabe wird durch die mehrschichtige Stegplatte gemäß der Neuerung gelöst.

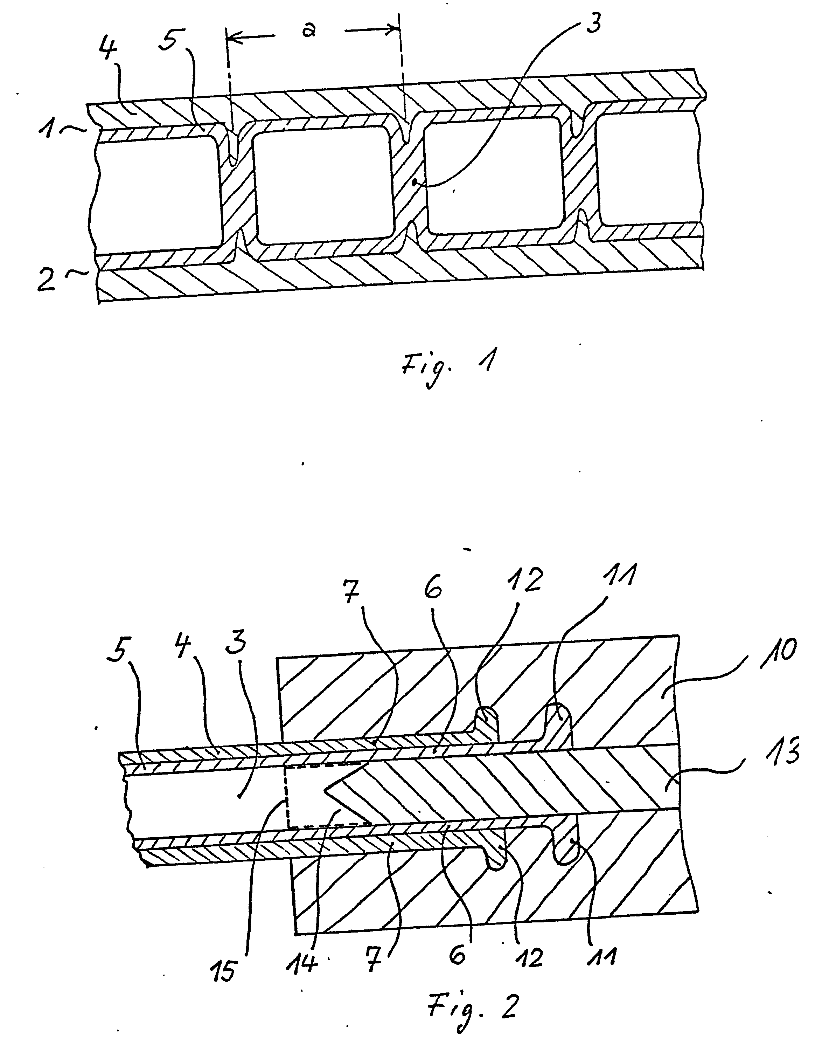

Eine Ausführungsform der Erfindung ist in <u>Figur 1</u> ausschnittsweise im Querschnitt dargestellt. <u>Figur 2</u> zeigt einen Schnitt durch eine Vorrichtung zur Herstellung der neuen Stegplatten.

Wenigstens die Außenwand (1), vorzugsweise beide Außenwände (1) und (2) enthalten eine tragende Schicht (4) aus eine Acrylglas, deren Dicke mehr als die Hälfte der Außewand (1) bzw. (2) ausmacht. Sie kann z. B. 0,6 bis 3 mm dick sein. An der Innenseite der Außenwand (1) bzw. (2) ist eine Schicht (5) aus einem Kunststoff von höherer Schlagzähigkeit als derjenigen des Acrylglases der Schicht (4) angeordnet. Sie ist dünner als die Acrylglasschicht (4), beispielsweise 0,05 bis 0,5, vorzugsweise 0,1 bis 0,2 mm dick.

Die Stege (3), die vorzugsweise senkrecht zu den Außenwänden (1, 2) stehen, aber auch schräg zu diesen angeordnet sein können; können teilweise aus dem erwähnten Acrylglas und teilweise aus dem Kunststoff höherer Bruchdehnung bestehen.

Die Gesamtdicke d der Stegplatte kann 6 bis 60 mm betragen. Die Stege (3) sind etwa gleich dick wie die Außenwände und können Abstände a haben, die dem 1- bis 2-fachen der Gesamtdicke d entsprechen, vorzugsweise 6 bis 120 mm. Die Dicke der Stege und Außenwände soll zweckmäßig 1/20 bis 1/5 der Gesamtdicke betragen. Die Gesamtbreite (quer zu den Stegen) kann z. B. 50 bis 200 cm betragen. Die Länge (in Stegrichtung) ist beliebig; handelsübliche Längen betragen 2 bis 20 m.

Unter Acrylglas werden - soweit nicht ausdrücklich anders angegeben - thermoplastisch verarbeitbare, insbesondere extrudierbare, nicht mit zähigkeitssteigenden Zusätzen legierte Homo- und Copolymerisate des Methylmethacrylats von geringer Bruchdehnung, beispielsweise 3 bis 4 %, verstanden, wobei der Anteil des Methylmethacrylats mehr als 90 Gew.-% ausmacht. Comonomere sind z.B. andere Alkylester der Methacrylsäure oder Alkylester der Acrylsäure. Im allgemeinen enthält das Acrylglas geringe Zusätze von UV-Schutzmitteln, Gleitmitteln usw. Farbloses, glasklares oder leicht getrübtes Material ist bevorzugt.

Die verminderte Schlagempfindlichkeit der erfindungsgemäßen Stegplatten beruht auf der erhöhten Bruchdehnung des Kunststoffes, aus dem die dünne Innenschicht (5) besteht. Überraschenderweise wird die Schlagempfindlichkeit bereits deutlich herabgesetzt, wenn die Bruchdehnung des Kunststoffes der Innenschicht um 1 bis 2 % (absolut) höher als die des Acrylglases ist. Sie liegt vorzugsweise über 5 % und kann mehr als 100 % betragen, während die Bruchdehnung des Acrylglases im allgemeinen unter 5 % liegt. Das Verhältnis der Bruchdehnungen der beiden Kunststoffe liegt in der Regel über 1,3 : 1.

Der Kunststoff von höherer Bruchdehnung muß ebenfalls thermoplastisch verarbeitbar, insbesondere mit dem Acrylglas koextrudierbar sein. Eine gute Haftung an dem Acrylglas ist ebenfalls wichtig. Die bevorzugten Kunststoffe sind Polycarbonate, insbesondere die aus aromatischen Bisphenolen, wie Bisphenol A, aufgebauten Kunststoffe, sowie Acrylglassorten mit erhöhter Bruchdehnung. Zu diesen gehören Mischpolymerisate aus weniger als 90 Gew.-% Methylmethacrylat und mehr als 10, vorzugsweise 15 - 30 Gew.-% Alkylacrylaten (1 - 8 C-Atome im Alkylrest) und legierte Acrylglassorten mit einem schlagzäh machenden Zusatz. Derartige Massen sind z. B. aus der DE-A-2 253 689 bekannt. Die genannten Acrylglassorten mit erhöhter Bruchdehnung fallen nicht unter den Begriff "Acrylglas" im oben gebrauchten Sinne.

Die Herstellung erfolgt zweckmäßig durch Koextrusion beider Schichten (4) und (5). Dazu werden in einer von zwei Extrudern gespeisten Mehrstoffdüse (10) zwei Doppelstränge (6, 7) gebildet. Mittels eines Extruders werden aus Verteilerkanälen (11) thermoplastische Stränge (6) aus dem Kunststoff mit höherer Bruchdehnung und mittels des zweiten Extruders aus Verteilerkanälen (12) thermoplastische Stränge (7) aus dem Acrylglas erzeugt und

2

haftend miteinander zu Doppelsträngen (6, 7) verbunden, wobei der Teilstrang (6) aus dem Kunststoff mit höherer Bruchdehnung an dem Kern (13) der Mehrstoffdüse (10) anliegt. In dem Bereich, in welchem der Kern (13) durch Spalte (14) in getrennte Kernstücke (15, in Figur 2 gestrichelt dargestellt) übergeht, tritt Formmasse aus den Teilsträngen (6) in die Spalte (14) ein und fließt dort zu den Stegen (3) zusammen.

Am Aufbau der Stege können beide Kunststoffe beteiligt sein. Ihre Verteilung in den Stegen hängt vom Mengenverhältnis der beiden Kunststoffarten, von den rheologischen Eigenschaften ihrer Schmelzen und von der Düsengeometrie ab.

Wenn nur eine Seite der Stegplatte eine verminderte Schlagempfindlichkeit haben soll, so genügt es, wenn ein Doppelstrang der beschriebenen Art erzeugt und der zweite Formmassenstrang allein aus dem Acrylglas gebildet wird.

Der Strang durchläuft nach dem Austritt aus dem Düsenmund in an sich bekannter Weise einen Vakuumformkanal, worin er unter die Erweichungstemperatur abgekühlt wird. Anschließend wird er zu Platten der gewünschten Länge zerlegt.

## Patentansprüche

1. Mehrschichtige Stegplatte, enthaltend zwei im wesentlichen ebene Außenwände und diese einstückig verbindende Stege, wobei wenigstens eine Außenwand aus wenigstens zwei haftend verbundenen Schichten aus verschiedenen Kunststoffen besteht,
dadurch gekennzeichnet,
daß die tragende Schicht der Außenwand aus einem Acrylglas besteht und mehr als die Hälfte der Gesamtdicke der Außenwand ausmacht, und daß an der innenliegenden Seite der Acrylglasschicht eine dünnere Innerischicht aus einem Kunststoff mit einer höheren Bruchdehnung als der des Acrylglases angeordnet ist.

2. Stegplatte nach Anspruch 1, dadurch gekennzeichnet, daß der Kunststoff mit der höheren Bruchdehnung eine Bruchdehnung von mehr als 5 % hat.

3. Stegplatte nach Anspruch 2, dadurch gekennzeichnet, daß das Verhältnis der Bruchdehnungen des Kunststoffes mit der höheren Bruchdehnung zu der des Acrylglases über 1,3 : 1 liegt.

4. Stegplatte nach Anspruch 1, dadurch gekennzeichnet, daß die Innenschicht aus Polycarbonatkunststoff oder aus einer Acrylglassorte mit einer höheren Bruchdehnung als der des Acrylglases der tragenden Schicht besteht.

5. Verfahren zur Herstellung einer mehrschichtigen Stegplatte nach den Ansprüchen 1 bis 4 durch Bildung von zwei Strängen aus thermoplastischer Formmasse und Verformung einer Seite von wenigstens einem der Stränge unter Ausbildung von Stegen und Verbinden der beiden Stränge durch Zusammenfließen der Stege mit dem anderen Strang oder den daraus gebildeten Stegen im thermoplastischen Zustand und Abkühlen der so geformten Stränge und Stege unter die Erweichungstemperatur, dadurch gekennzeichnet, daß wenigstens einer der Stränge durch haftendes Verbinden eines Teilstranges aus einem thermoplastischen Acrylglas und eines Teilstranges aus einem thermoplastischen Kunststoff von höherer Bruchdehnung zu einem thermoplastischen Doppelstrang erzeugt wird und daß die Seite des Doppelstranges, an der der Teilstrang aus dem Kunststoff mit höherer Bruchdehnung liegt, zu Stegen verformt bzw. mit dem anderen Strang zusammenfließen gelassen wird.

## Claims

1. Multi-layer web plate, comprising two substantially flat outer walls and webs which connect them integrally, at least one outer wall consisting of at least two adhesively connected layers of different plastics materials, characterised in that the supporting layer of the outer wall consists of an acrylic glass and constitutes more than half the total thickness of the outer wall, and in that, located on the inner side of the layer of acrylic glass, is a thinner internal layer of a plastics material having a higher elongation at break than the acrylic glass.

2. Web plate as claimed in claim 1, characterised in that the plastics with the higher elongation at break has an elongation at break of more than 5 %.

3. Web plate as claimed in claim 2, characterised in that the ratio of the elongatios at break of the plastics material with the higher elongation at break to that of the acrylic glass is more than 1.3 : 1.

4. Web plate as claimed in claim 1, characterised in that the inner layer consists of Polycarbonate plastics or a type of acrylic glass with a higher elongation at break than the acrylic glass of the supporting layer.

5. Process for producing a multi-layer web plate as claimed in claims 1 to 4 by forming two strips of thermoplastic moulding composition and forming one side of at least one of the strips, to produce webs, and connecting the two strips by causing the webs to flow together with the other strip or the webs formed therefrom in the thermoplastic state and cooling the strips and webs thus produced to a temperature below the softening temperature, characterised in that at least one of the strips is produced by adhesively connecting a partial strip of a thermoplastic acrylic glass and a partial strip of a thermoplastic plastics material of a higher elongation at break in order to produce a thermoplastic double strip and in that the side of the double strip on which the partial strip consisting of the plastics with the higher elongation at break abuts is deformed to produce webs or is allowed to flow together with the other strip.

**Revendications**

1. Plaque nervurée à plusieurs couches, comprenant deux parois extérieures essentiellement planes et des nervures qui relient celles-ci d'un seul tenant, l'une au moins des parois extérieures etant faite d'au moins deux couches en des matières plastiques différentes, unies par adhérence, caractérisée en ce que la couche porteuse de la paroi extérieure est faite d'un verre acrylique et constitue plus de la moitié de l'épaisseur totale de la paroi extérieure, et en ce qu'il est disposé, sur la face interne de la couche de verre acrylique, une couche intérieure plus mince en une matière plastique dont l'allongement à la rupture est plus élevé que celui du verre acrylique.

2. Plaque nervurée selon la revendication 1, caractérisée en ce que la matière plastique dont l'allongement à la rupture est plus élevé à un allongéent à la rupture de plus de 5 %.

3. Plaque nervurée selon la revendication 2, caractérisée en ce que le rapport de l'allongement à la rupture de la matière plastique dont l'allongement à la rupture est plus élevé à celui du verre acrylique se situe au-dessus de 1,3: 1.

4. Plaque nervurée selon la revendication 1, caractérisée en ce que la couche intérieure est faite de matière plastique de polycarbonate ou d'une sorte de verre acrylique dont l'allongement à la rupture est plus élevé que celui du verre acrylique de la couche porteuse.

5. Procédé de fabrication d'une plaque nervurée à plusieurs couches selon l'une quelconque des revendications 1 à 4, par formation de deux boudins en matière à mouler thermoplastique, façonnage d'un côté de l'un au moins des boudins avec formation de nervures, union des deux boudins par réunion, à l'état thermoplastique, des nervures à l'autre boudin ou aux nervures formées sur celui-ci et refroidissement des boudins et nervures ainsi façonnés au-dessous de la température de ramollissement, caractérisé en ce que l'un au moins des boudins est produit par union par adhérence d'un boudin partiel en un verre acrylique thermoplastique et d'un boudin partiel en une matière thermoplastique dont l'allongement à la rupture est plus élevé, pour former un double boudin thermoplastique, et en ce que le côté du double boudin sur lequel se trouve le boudin partiel en matière plastique d'allongement à la rupture plus élevé est façonné en nervures ou est amené à se réunir à l'autre boudin.

0 118 683

Fig. 1

Fig. 2